(19) Europäisches Patentamt / European Patent Office / Office européen des brevets

(11) **EP 2 876 749 A2**

(12) **DEMANDE DE BREVET EUROPEEN**

(43) Date de publication:
**27.05.2015 Bulletin 2015/22**

(51) Int Cl.:
*H01S 3/038* (2006.01)          *G01C 19/66* (2006.01)
*C03C 27/04* (2006.01)

(21) Numéro de dépôt: **14190923.4**

(22) Date de dépôt: **29.10.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.11.2013 FR 1302585**

(71) Demandeur: **Thales**
**92200 Neuilly Sur Seine (FR)**

(72) Inventeurs:
• **Mary, Alexandre**
  **86100 CHATELLERAULT (FR)**
• **Foucret, Dominique**
  **86540 THURE (FR)**

(74) Mandataire: **Brunelli, Gérald**
**Marks & Clerk France**
**Immeuble Visium**
**22, avenue Aristide Briand**
**94117 Arcueil Cedex (FR)**

(54) **Electrode de matériau métallique, et gyrolaser comprenant au moins une telle électrode**

(57)      Electrode (2) de matériau métallique comprenant un axe de révolution (6) et une face inférieure (2a) de diamètre externe supérieur au diamètre externe d'une face supérieure (2b), caractérisé en ce que qu'elle comprend une ailette (10) de révolution autour dudit axe de révolution (6), sur la partie inférieure de la face latérale (2c), ladite ailette (10) ayant une longueur radiale L et une épaisseur h telles que le rapport L/h est inférieur à un seuil, L et h respectant la relation suivante :

$$\frac{L.\sqrt[3]{L}}{h} \geq \sqrt[3]{\frac{2EX}{5\sigma}}$$

dans laquelle :
E représente le module de Young du matériau métallique,
X représente la déflexion minimale tolérée de l'ailette, et
σ représente la contrainte thermique agissant sur l'ailette..

FIG.3

Printed by Jouve, 75001 PARIS (FR)

## Description

La présente invention porte sur une électrode de matériau métallique, et un gyromètre laser ou gyrolaser comprenant au moins une telle électrode.

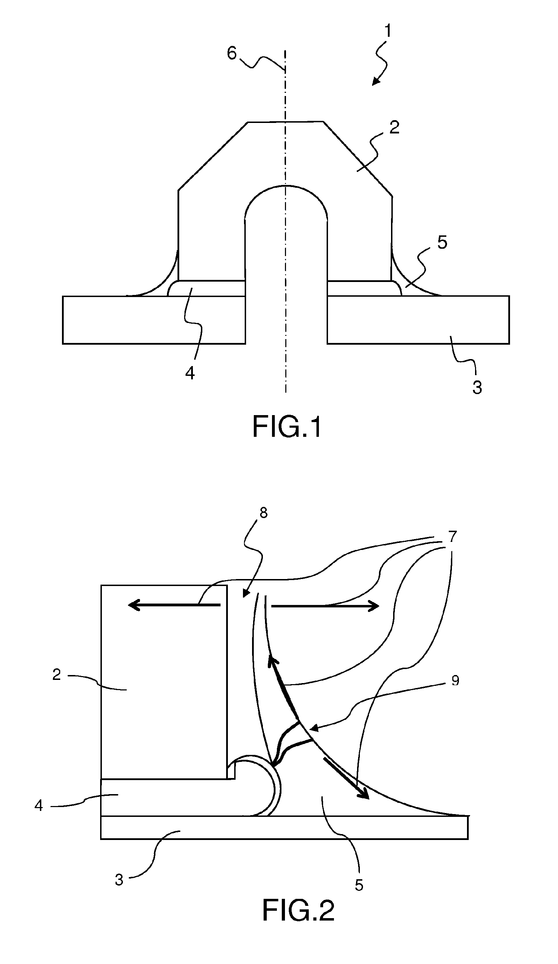

Les gyromètres laser ou gyrolasers 1 comportent des électrodes 2, cathodes et anodes, telles qu'illustrées sur la figure 1, servant à l'amorçage du mélange gazeux, généralement un mélange Helium-Néon en vue d'obtenir l'effet laser. Ces électrodes 2 sont liées à une structure verre ou vitrocéramique 3 (par exemple du Zerodur (marque déposée)) par compression d'un matériau métallique malléable 4 (typiquement un alliage d'Indium). Afin de protéger le joint de la liaison 4, un matériau d'enrobage 5 (typiquement de la colle ou du silicone) est déposé par-dessus afin d'isoler le matériau d'interface 4 de l'environnement et se prémunir des phénomènes de corrosion représentant un danger pour la durée de fonctionnement du gyrolaser 1. De telles électrodes sont généralement de symétrie axiale par rapport à un axe 6.

Comme illustré sur la figure 2, lors de cycles de montée en température et de refroidissement, le matériau d'enrobage ou colle 5 est soumise à des contraintes 7 du fait de l'écart entre les coefficients de dilatation thermique. Elles peuvent conduire à des sollicitations en tractions, et ces phénomènes sont parfois critiques vis-à-vis de l'intégrité de la colle 5. Ils sont constatés essentiellement au niveau de la cathode car les contraintes mise en jeu sont plus importantes du fait des dimensions. Ces contraintes 7 peuvent provoquer un léger décollement 8 de la colle 5 et/ou des fissurations 9.

Dans la suite de la présente demande, le terme colle pour matériau d'enrobage 5 ne sera pris qu'à titre d'exemple nullement limitatif.

Un but de l'invention est de réduire les sollicitations en traction de la colle 5, afin d'améliorer la durée de fonctionnement de la jonction entre les électrodes 2 et le Zerodur 3 en limitant les ruptures précoces du film de colle 5, et ce à coût réduit et sans modifier la chaîne de production.

Il est proposé, selon un aspect de l'invention, une électrode de matériau métallique comprenant un axe de révolution et une face inférieure de diamètre externe supérieur au diamètre externe d'une face supérieure, caractérisé en ce que qu'elle comprend une ailette de révolution autour dudit axe de révolution, sur la partie inférieure de la face latérale, ladite ailette ayant une longueur radiale L et une épaisseur h telles que le rapport L/h est inférieur a un seuil, L et h respectant la relation

suivante : $\dfrac{L.\sqrt[3]{L}}{h} \geq \sqrt[3]{\dfrac{2EX}{5\sigma}}$

dans laquelle :

E représente le module de Young du matériau métallique,

X représente la déflexion minimale tolérée de l'ailette, et

σ représente la contrainte thermique agissant sur l'ailette.

Une telle ailette ou lame permet de réduire les sollicitations en traction de la colle, et d'améliorer la durée de fonctionnement de la jonction entre les électrodes et le Zerodur en limitant les ruptures précoces du film de colle, et ce à coût réduit et sans modifier la chaîne de production.

En effet, la colle est moins sollicitée en traction et plus en cisaillement, les contraintes sont réparties sur une plus grande surface. Aussi, le décollement et la fissuration de la colle sont nettement limitées.

Dans un mode de réalisation, ledit seuil dépend du matériau métallique de l'électrode.

Ainsi, on adapte le seuil au matériau métallique de l'électrode, ce qui permet de concevoir au mieux l'ailette adaptée en fonction du matériau métallique de l'électrode.

Selon un mode de réalisation, l'ailette est droite.

Une telle ailette a une réalisation simplifiée.

En variante, l'ailette est crénelée.

Une ailette crénelée améliore la limitation du décollement et de la fissuration de la colle.

Selon un mode de réalisation, ladite électrode est une cathode.

En effet, les problèmes de fissures et de décollement du matériau d'enrobage sont surtout constatés au niveau de la ou des cathodes car les contraintes mises en jeu sont plus importantes du fait des dimensions.

Il est également proposé, selon un autre aspect de l'invention, un gyrolaser comprenant au moins une électrode telle que précédemment décrite, comprenant, en outre, un élément de verre ou de vitrocéramique, un matériau métallique malléable de liaison disposé entre la face inférieure de l'électrode et l'élément de verre ou de vitrocéramique, et un matériau d'enrobage isolant le matériau de liaison (ou d'interface) pour se prémunir des phénomènes de corrosion, dans lequel ladite ailette est disposée à l'intérieur dudit matériau d'enrobage isolant.

Un tel gyrolaser a une robustesse améliorée vis-à-vis des sollicitations thermiques et chimiques externes.

Dans un mode de réalisation, le matériau métallique de l'électrode comprend de l'aluminium.

L'utilisation d'aluminium a un coût réduit tout en procurant une résistance élevée aux phénomènes de pulvérisation électronique existant dans les cathodes.

Selon un mode de réalisation, ledit matériau métallique malléable de liaison comprend de l'indium.

L'indium a pour avantages d'être malléable, même à de basses températures (<-50°C), hermétique et capable de supporter la différence de coefficient de dilatation thermique des matériaux de l'électrode.

Dans un mode de réalisation, ledit matériau d'enrobage isolant comprend de la colle.

Ainsi, l'indium est isolé de l'environnement extérieur pouvant être composé d'élément corrosifs/ réactifs, et l'utilisation de colle comme matériau d'enrobage présente une excellente adhésion aux différents matériaux comme le métal ou le verre.

Selon un mode de réalisation, ledit élément de verre ou de vitrocéramique est du Zerodur (marque déposée).

Ainsi, la longueur de cavité du gyrolaser reste constante sur la gamme de température de fonctionnement du gyrolaser.

L'invention sera mieux comprise à l'étude de quelques modes de réalisation décrits à titre d'exemples nullement limitatifs et illustrés par les dessins annexés sur lesquels :

- la figure 1 illustre schématiquement une électrode de gyrolaser selon l'état de la technique;
- la figure 2 illustre les problèmes de l'art antérieur ; et
- les figures 3, 4a et 4b, illustrent un mode de réalisation d'électrode de gyrolaser.

Sur l'ensemble des figures, les éléments ayant des références identiques sont similaires.

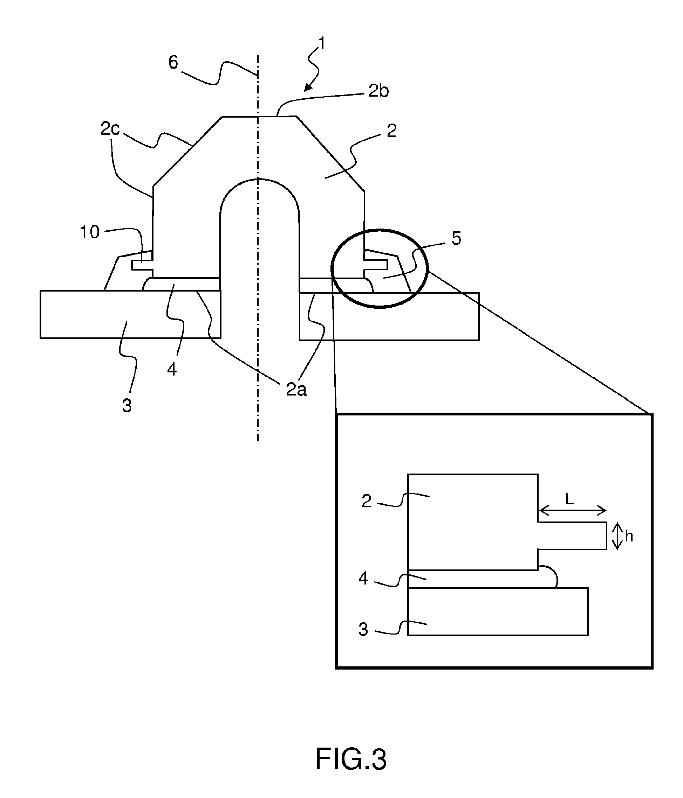

Tel qu'illustré sur la figure 3, une électrode 2, en l'espèce une cathode, de gyrolaser, selon un aspect de l'invention, est liée à une structure verre ou vitrocéramique 3 (par exemple du Zerodur (marque déposée)) par compression d'un matériau métallique malléable 4 (typiquement un alliage d'Indium). Afin de protéger le joint de la liaison 4, un matériau d'enrobage 5 (typiquement de la colle ou du silicone) est déposé par-dessus afin d'isoler le matériau d'interface 4 de l'environnement et se prémunir des phénomènes de corrosion représentant un danger pour la durée de fonctionnement du gyrolaser 1. De telles électrodes sont généralement de symétrie axiale par rapport à un axe 6. La cathode 2 est munie d'une face inférieure 2a de diamètre externe supérieur au diamètre externe d'une face supérieure 2b.

La cathode 2 est munie d'une ailette ou lame 10, en l'espèce de révolution selon l'axe de révolution 6, sur la partie inférieure de la face latérale 2c.

L'ailette 10 a une longueur radiale L et une hauteur h telles que le rapport L/h est inférieur à un seuil, qui peut dépendre du matériau métallique de l'électrode.

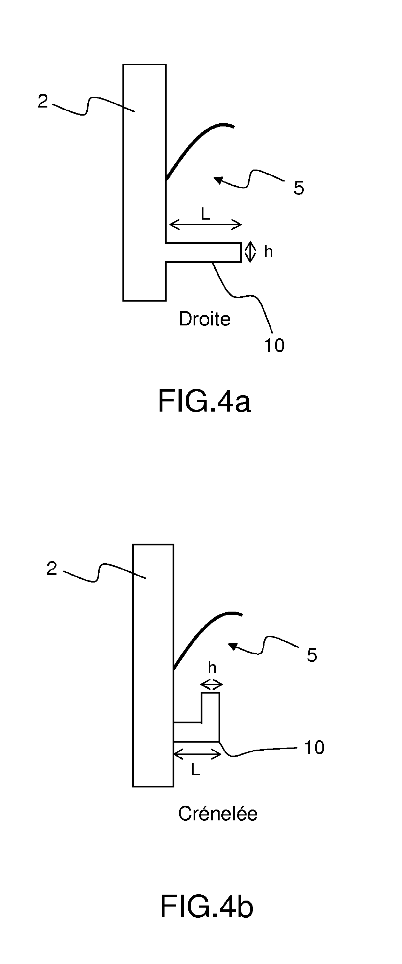

Comme illustré sur les figures 4a et 4b, la longueur radiale L représente la longueur de l'ailette 10 selon une direction perpendiculaire à l'axe de révolution 6.

L'ailette 10 forme un plateau sur le pourtour de l'électrode 2, sur lequel le matériau d'enrobage 5 isolant le matériau d'interface 4 vient reposer. En plus d'augmenter la surface de contact, l'ailette 10 privilégie une sollicitation en cisaillement sur une bonne partie de ses surfaces.

De plus, le matériau d'interface ou joint 4 n'est pas en contact avec l'environnement extérieur, ou seulement en cas de grande fissuration ou de décollement complet du matériau d'enrobage 5 sur l'ailette. Le joint 4 est donc triplement protégé :

- le matériau d'enrobage 5 est moins sollicité en traction et plus en cisaillement;
- les contraintes sont réparties sur une surface augmentée; et
- le décollement et la fissuration n'ont pas le même niveau de criticité du fait de la morphologie de l'enrobage, par exemple le collage.

La ou les cathodes du gyrolaser disposent d'une ailette 10 sur le pourtour afin que le matériau d'enrobage 5 y adhère tout en étant moins exposé à un endommagement de type mécanique du fait de la différence des coefficients de dilatation thermique.

La liaison entre l'électrode 2 (par exemple en aluminium) et le Zerodur 3 se fait par thermocompression d'un joint d'indium 4. Le contact métallique, en plus de résidus de chlorure sur le joint 4, entraîne, en présence d'un environnement aqueux et/ou oxygéné, la corrosion du joint 4. La durée de fonctionnement du gyrolaser dépend de l'intégrité de l'interface aluminium/indium, car une fuite conduirait à la perte de l'effet laser dans le gyrolaser du fait de la pollution par l'air. La corrosion menace cette intégrité, c'est pourquoi une protection sous forme de colle ou autre produit d'enrobage 5 est déposée sur le joint 4 afin de l'isoler de l'environnement et ainsi diminuer les risques de corrosion localisée.

Cependant, du fait de la différence des coefficients de dilatation thermique, des contraintes apparaissent dans la colle 5, pouvant entrainer soit un décollement, soit une fissuration. Le type de sollicitations les plus critiques sont les sollicitations en traction.

L'ailette 10 permet de se prémunir de l'ouverture de l'isolant. Elle peut par exemple être droite (figure 4a) ou crénelée (figure 4b) et sert de surface d'accroche pour le matériau d'enrobage 5.

Le joint d'indium 4 est situé sous l'ailette 10. Lors de la dépose de colle 5, celle-ci se fixe en grande partie sur le plateau formé (partie horizontale) et moins sur le corps de la cathode 2 (partie verticale).

La fixation sur les parties horizontales est essentiellement sollicitée en cisaillement, le collage est donc plus résistant. En ajoutant des créneaux, il est possible d'accroître la surface de collage et donc améliorer la tenue générale en répartissant les contraintes.

Enfin, même en cas de décollement sur la partie verticale ou de fissuration, le joint 4 est protégé de l'environnement par l'ailette 10.

Pour que la colle de protection 5 travaille principalement en cisaillement, et non en compression, les dimensions de l'ailette 10 respectent la condition suivante :

$$\frac{L\sqrt[3]{L}}{h} \geq \sqrt[3]{\frac{2EX}{5\sigma}}$$

dans laquelle

E représente le module de Young du matériau métallique,

X représente la déflexion minimale tolérée de l'ailette, et

σ représente la contrainte thermique agissant sur l'ailette.

Le respect de cette inéquation implique que l'ailette 10 fléchit lors de l'apparition des contraintes thermiques plutôt que ces dernières travaillent à l'arrachement du joint 4.

Les dimensions sont bien évidemment soumises aux règles de faisabilité en considérant les dimensions typique d'une électrode 2 de gyrolaser, tous les couples (L;h) répondant à cette inéquation sont valides.

L'électrode typique est comprise entre 0,5 cm et 4 cm de diamètre. Préférentiellement, l'ailette 10 a une longueur de 2.5 mm pour une hauteur de 0.5 mm maximum.

**Revendications**

1.  Electrode (2) de matériau métallique comprenant un axe de révolution (6) et une face inférieure (2a) de diamètre externe supérieur au diamètre externe d'une face supérieure (2b), **caractérisé en ce que** qu'elle comprend une ailette (10) de révolution autour dudit axe de révolution (6), sur la partie inférieure de la face latérale (2c), ladite ailette (10) ayant une longueur radiale L et une épaisseur h telles que le rapport L/h est inférieur à un seuil, L et h respectant la relation suivante :

$$\frac{L.\sqrt[3]{L}}{h} \geq \sqrt[3]{\frac{2EX}{5\sigma}}$$

dans laquelle :

E représente le module de Young du matériau métallique,

X représente la déflexion minimale tolérée de l'ailette (10), et

σ représente la contrainte thermique agissant sur l'ailette (10).

2.  Electrode (2) selon la revendication 1, dans lequel ledit seuil dépend du matériau métallique de l'électrode (2).

3.  Electrode (2) selon la revendication 1 ou 2, dans lequel l'ailette (10) est droite.

4.  Electrode (2) selon la revendication 1 ou 2, dans lequel l'ailette (10) est crénelée.

5.  Electrode (2) selon l'une des revendication précédente, étant une cathode.

6.  Gyrolaser (1) comprenant au moins une électrode (2) selon l'une des revendications précédentes, comprenant, en outre, un élément de verre ou de vitrocéramique (3), un matériau métallique malléable de liaison (4) disposé entre la face inférieure (2a) de l'électrode (2) et l'élément de verre ou de vitrocéramique (3), et un matériau d'enrobage (5) isolant le matériau de liaison (4) pour se prémunir des phénomènes de corrosion, dans lequel ladite ailette (10) est disposée à l'intérieur dudit matériau d'enrobage isolant (5).

7.  Gyrolaser selon la revendication 6, dans lequel le matériau métallique de l'électrode (2) comprend de l'aluminium.

8.  Gyrolaser selon la revendication 6 ou 7, dans lequel ledit matériau métallique malléable de liaison (4) comprend de l'indium.

9.  Gyrolaser selon l'une des revendications 6 à 8, dans lequel ledit matériau d'enrobage isolant (5) comprend de la colle.

10. Gyrolaser selon l'une des revendications 6 à 9, dans lequel élément de verre ou de vitrocéramique (3) est du Zerodur (marque déposée).

FIG.1

FIG.2

EP 2 876 749 A2

FIG.3

6

2

L

h

5

Droite

10

## FIG.4a

2

h

5

10

L

Crénelée

## FIG.4b